# EUROPEAN PATENT SPECIFICATION

(11) **EP 4 081 722 B1**
(45) Date of publication and mention of the grant of the patent: **28.08.2024**
(21) Application number: 20845228.4
(22) Date of filing: 23.12.2020
(51) Int. Cl.: F16G 1/28, F16G 1/12, F16G 1/10

(54) **POWER TRANSMISSION BELT AND ITS TRANSMISSION SYSTEM**
TREIBRIEMEN UND SEIN ÜBERTRAGUNGSSYSTEM
COURROIE DE TRANSMISSION DE PUISSANCE ET SON SYSTÈME DE TRANSMISSION

(30) Priority: 23.12.2019 IT 201900025243
(43) Date of publication of application: 02.11.2022
(73) Proprietor: Dayco Europe S.R.L., 66100 Chieti (IT)
(72) Inventor: DI MECO, Marco, 66100 Chieti (IT); CIPOLLONE, Franco, 66100 Chieti (IT); PIERMATTEO, Carlo, 66100 Chieti (IT); FERRI, Gaetano, 66100 Chieti (IT); DELLI ROCIOLI, Massimiliano, 66100 Chieti (IT); NARDONE, Fabio, 66100 Chieti (IT)
(74) Representative: Studio Torta S.p.A.
(86) International application number: PCT/IB2020/062393
(87) International publication number: WO 2021/130694

(56) References cited:
- RU-C1- 2 025 612
- US-A- 4 601 685
- US-A- 4 741 726
- US-A1- 2018 313 430

## Description

### CROSS-REFERENCE TO RELATED APPLICATIONS

This patent application claims priority from Italian patent application no. 102019000025243 filed on 23/12/2019.

### TECHNICAL FIELD

The present invention relates to a transmission belt and in particular, to a belt for use in transmission systems of motor vehicles and to its transmission system.

### BACKGROUND ART

The present invention is preferably used for the transmission of motion in a transmission assembly of a motor vehicle comprising an internal combustion engine.

Currently, many synchronous transmission systems of motor vehicles use gears or chains instead of toothed belts. However, both gears and chains are complex systems to produce. Both chains and gears are noisier and operate exclusively with lubricating oil, furthermore, wear of the metal parts in contact occurs during operation, with consequent variation of the geometries (backlashes, elongation...). Therefore, replacement with a belt allows greater precision during meshing.

In addition to these main drawbacks, both chains and gears are very costly.

For these reasons, it would be desirable to replace chains and gears with toothed belts without having to make any changes to the transmission system as a whole.

However, the chains that are used are generally narrower than the corresponding toothed belts used in the most common transmission systems and it would therefore be desirable to use narrower belts than those commonly used.

Furthermore, the objectives in the design of new vehicles, are resizing the engine, increasing specific power, improving engine performance, reducing losses due to friction, optimising vehicle mass, reducing engine vibrations and aiming at cost reduction.

Furthermore, it is important to obtain minimisation of noise emissions and engine vibrations.

Designers are aware that internal combustion engines, depending on the architecture of the engine, generate vibrations: inertia forces and torques of the oscillating masses, often unbalanced, produce vibrations and noise disturbances inside the vehicle.

To compensate for the unbalanced inertia forces and torques generated by acceleration of the oscillating masses, the designer can integrate one or two balance shafts with the engine: however, for vehicles of small size, target-to-cost strategies and size restrictions may force the designer also to accept a lower comfort level, without using systems with balance shafts.

Therefore, in recent years there has been a considerable increase in the demand for compact and reliable solutions for operating cam systems and injection pumps.

Due to these problems there is a continuous search for improved transmission belts that allow the increasingly strict specifications demanded by motorcar manufacturers to be satisfied.

US4601685 discloses an endless conveyer or drive belt reaching with a portion of its cross-sectional configuration facing toward respective guide or drive rollers, into corresponding ring grooves in the rollers. The projecting portion includes an endless helical spring partially embedded in the drive belt. The ends of the helical spring are connected to each other. The spring keeps the belt trained on the rollers.

US2018313430 discloses a synchronous belt with a tensile member layer having a tensile member embedded in an elastomeric body; a toothed surface with a plurality of regularly spaced, transverse teeth protruding from the body; and a jacket covering the toothed surface; wherein the teeth comprise a plurality of fabric insert layers that increase the stiffness of the tooth, the insert layers separated from each other by layers of an elastomer composition. The layers may be oriented parallel to the tensile member layer, perpendicular to the tensile member, or following the contour of the tooth. The layers may be a single piece of fabric folded into layers, or separate pieces of fabric.

US4741726 discloses a trapezoidal cross section cog belt comprising a rubber body having longitudinally spaced inner cogs, a longitudinally extending tension resisting girdle and transversally extending reinforcement members in said cogs, said members having a bandular open shape adapted to undergo deformation in the longitudinal direction of the belt when the same is in use.

### OBJECT OF THE INVENTION

The aim of the present invention is to obtain a transmission belt which allows the above-mentioned problems to be solved.

According to the present invention, this aim is achieved with a *transmission belt* according to claim 1.

A further aim of the present invention is to obtain a *transmission system* comprising a transmission belt capable of solving the above-mentioned problems.

According to the present invention, this aim is achieved by a transmission system according to claim 13.

### BRIEF DESCRIPTION OF THE DRAWINGS

For a better understanding of the present invention, it shall now be described also with reference to the accompanying figures, wherein:
- Fig. 1 illustrates a partial perspective view of a portion of transmission belt according to the present invention;
- Fig. 2 illustrates an enlarged portion of the transmission belt according to the present invention of Fig. 1;
- Fig. 3 illustrates a schematic frontal view of a preferred embodiment of a belt transmission assembly according to the present invention.

### DESCRIPTION OF THE INVENTION

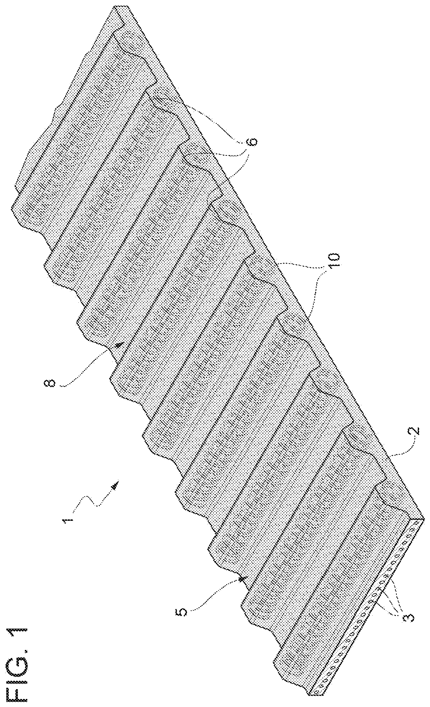

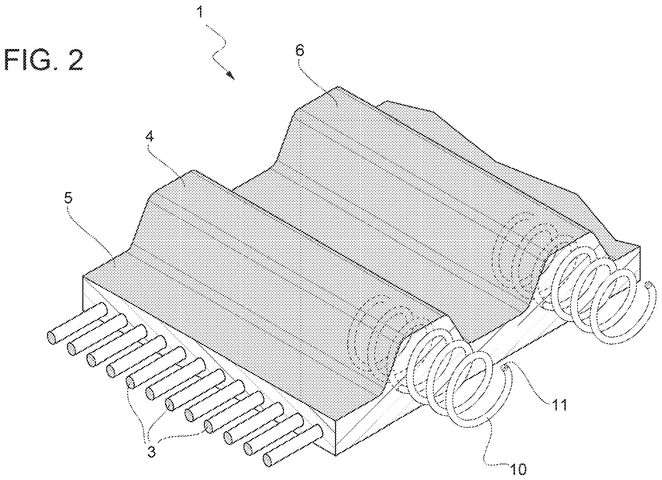

In Fig. 1 and Fig. 2 the reference numeral 1 indicates, as a whole, a toothed belt. The belt 1 comprises a body 2. A plurality of longitudinal thread-like durable inserts 3, also alternatively named "cords", are embedded in the body 2.

The belt also comprises a toothing 4 composed of a plurality of teeth 6, which in use constitute the working surface 5, or the surface that meshes with a corresponding pulley of the transmission system.

The toothed belt further comprises a back 7 opposite to the working surface 5.

Preferably, the body 2 comprises a first elastomeric compound comprising a first main elastomeric material.

In an aspect of the present invention, the belt 1 comprises a helical element 10 that extends transversely to the belt and therefore along the tooth as shown in Fig. 1 and at least partially inside the tooth 6 or the toothing. In other words, the helical element occupies a part of the volume of the teeth 6 and a part of the volume of the body 2, causing a stiffening of the structure, in particular of the teeth.

The helical element 10 may or may not come into contact with the cords 3, which in Fig. 1 are represented schematically with a dashed line.

In other words, the helical element 10 can be completely and exclusively inside the toothings or alternatively also occupy a portion of the body 2 of the belt 1, optionally by coming into contact also with the cords 3.

In any case, the helical element 10 is contained completely inside the belt and in other words does not protrude from the surfaces of the belt, except possibly from the side elements of the belt itself.

Therefore, each tooth 6 preferably comprises a helical element 10.

Alternatively, the individual tooth 6 could comprise several helical elements 10 with different geometrical and/or physical characteristics. Furthermore, the helical element 10 can adopt different geometrical and/or physical characteristics and not necessarily the same on all the teeth comprised in the toothing 4.

By helical element 10 we mean an element constituted by an elongated wire or element wound in a helix, or in other words in regular or irregular windings, and therefore a wire that is wound forming a winding with a given diameter and a given fixed or variable pitch, preferably with a fixed pitch.

The helical element 10 is therefore an elastic element prior to being arranged in the belt and is thus capable of expanding and contracting when subjected to a given tensile and compressive load along its main axis.

In particular, the helical element 10 preferably has a tensile elastic constant comprised between 0.02 N/mm and 100 N/mm, more preferably between 0.2 N/mm and 45 N/mm. Moreover, the helical element 10 preferably has a compressive elastic constant comprised between 0.06 N/mm and 300 N/mm, more preferably between 0.2 N/mm and 150 N/mm.

Preferably, the helical element 10 has an elongation stiffness in the direction of the axis of the winding comprised between 0.06 N/mm and 300 N/mm.

More preferably, the helical element 10 is a spring.

The section 11 of the wire constituting the helical element 10 can have any preferably regular shape, more preferably circular, elliptical, polygonal, such as square, pentagonal, hexagonal or rectangular, but can also have a section that does not have a regular shape so as to adapt to the shape of the teeth 6 in the most suitable manner.

Preferably, the wire forming the helical element 10 has a circular, elliptical or polygonal shaped section.

Even more preferably, the wire forming the helical element 10 has a circular section. In this case, the wire forming the metal based helical element 10 has a diameter preferably comprised between 0.2 mm and 3 mm.

The section of the wire constituting the helical element 10 advantageously has an area comprised between 0.02 mm² and 10 mm², more preferably between 0.03 mm² and 8 mm².

Advantageously, the helical element 10 has a length comprised between 1 cm and 20 cm per centimetre of belt width, when calculated on the vulcanised belt.

Advantageously, the helical element 10 has a number of windings comprised between 0.1 and 40 per centimetre of belt width, more preferably between 0.3 and 10, hereinafter indicated as pitch of spiralling.

The helical element 10 has pitch of spiralling not dependent on the position of the cords 3 in the body of the belt. In an alternative embodiment, the helical element 10 can have a pitch of spiralling such as to alternate with the cords 3 in the body of the belt as in the embodiment illustrated in Figs. 1 and 2.

Advantageously, the helical element 10 is a metal based element and therefore formed by at least 30%, more preferably 50%, by weight of metal.

Even more preferably, it is formed by at least 80% by weight of metal.

Advantageously, the metal is steel.

The use of composite materials is also advantageous.

Advantageously, the width of the belt is comprised between 3 mm and 100 mm, more preferably between 10 mm and 35 mm.

Advantageously, the pitch of the belt is comprised between 3 mm and 20 mm, more preferably between 5 mm and 14 mm, for example 9.525, ideal for application to vehicles.

Preferably, the body 2 of the belt 1 is made in a body compound comprising one or more elastomeric materials and numerous additives. The elastomeric material or materials is/are indicated as a whole for convenience hereinafter as "first elastomeric material".

The body of the belt advantageously comprises a first elastomeric material selected from the group consisting of natural rubber (NR), polychloroprene rubber (CR), acrylonitrile butadiene rubber (NBR) and related hydrogenated elastomers known as hydrogenated acrylonitrile butadiene rubber (HNBR) or zinc salt unsaturated carboxylic acid ester grafted acrylonitrile butadiene rubber, polyisoprene, styrenebutadiene rubbers, ethylene-alpha-olefin elastomers, EPDM, polyurethane, fluoroelastomers, ethylene-acrylic elastomers (AEM), bromobutyls, chlorosulphonated polythene (CSM) or chlorosulphonated alkyl, chlorinated polythene, epoxidized natural rubber, SBR, NBR carboxylates, HNBR carboxylates, ACM and mixtures of these compounds.

Advantageously, the first elastomeric material is present in the body compound as "main elastomer" i.e., is present in the body compound for over 50% by weight calculated on the total weight of all the elastomers in the compound and therefore excluding all the other non-elastomeric components of the belt.

The body 2 preferably comprises as first or as further elastomeric material at least one copolymer of polyolefin or a rubber containing acrylonitrile units.

More advantageously, the copolymer or copolymers used as body compounds are nitrile rubbers, advantageously acrylonitrile butadiene rubbers, known with the acronym NBR. Even more advantageously, they are hydrogenated acrylonitrile butadiene rubber or HNBR or even XHNBR, i.e., carboxylated hydrogenated acrylonitrile rubber.

For example, "fully saturated" HNBRs, hence having a percentage of residual double bonds of 0.9% at most, can be used, or HNBRs with a lower saturation degree, such as "partially saturated" HNBRs having a saturation degree of 4% or of 5.5%, can alternatively be used.

Some examples of HNBR copolymers that can be used in the body compound, but also in the different treatments of the various elements constituting the toothed belt, are copolymers belonging to the THERBAN family produced by Lanxess, such as THERBAN 3407 with 34 % nitrile groups and a hydrogenation degree of 0.9 % at most, THERBAN 3406 with 34 % nitrile groups and an unsaturation degree of 0.9 % at most, THERBAN 3607 with 36 % nitrile groups and an unsaturation degree of 0.9 % at most, THERBAN 3446 with 34 % nitrile groups and an unsaturation degree of 4 % at most, THERBAN 3447 with 34 % nitrile groups and an unsaturation degree of 5.5 % at most, THERBAN 3627 with 36 % nitrile groups and an unsaturation degree of 2 % at most, THERBAN 3629 with 36 % nitrile groups and an unsaturation degree of 2 % at most, THERBAN 3907 with 39 % nitrile groups and an unsaturation degree of 0.9 % at most.

Alternatively, it is also possible to use the HNBRs produced by Nippon Zeon with the name ZETPOL. In particular, ZETPOL 2000 with 36% nitrile groups and an unsaturation degree of 0.9% at most, ZETPOL 2000L with 36% nitrile groups and an unsaturation degree of 0.9% at most, ZETPOL 2010 with 36% nitrile groups and an unsaturation degree of 4% at most, ZETPOL 2010L with 36% nitrile groups and an unsaturation degree of 4% at most, ZETPOL 2010H with 36% nitrile groups and an unsaturation degree of 4% at most, ZETPOL 2020 with 36% nitrile groups and an unsaturation degree of 5.5% at most, and ZETPOL 2020L with 36% nitrile groups and an unsaturation degree of 5.5% at most.

Even more advantageously, an elastomeric material formed by a mixture of one or more copolymers, obtained starting from a diene monomer and a monomer containing nitrile groups where an acid or salt of an unsaturated carboxylic acid is added to one or more of these copolymers, is used in combination with a first elastomeric material. More advantageously, the unsaturated carboxylic acid is methacrylic or acrylic acid and said salt is a zinc salt of methacrylic or acrylic acid. Even more advantageously, a zinc salt of methacrylic acid is used. Even more advantageously, the zinc salt of methacrylic acid is added in a quantity comprised between 10 and 60 phr.

For example, the elastomers sold by Zeon with the following names are advantageously used: ZSC 1295, ZSC 2095, ZSC 2195, ZSC 2295, ZSC 2295L, ZSC 2295R and ZSC 2395.

In particular, it is possible to partially or fully replace the previously mentioned HNBRs, i.e., ZETPOL and/or THERBAN with a ZSC that comprises an unsaturated carboxylic acid and zinc oxide and/or with THERBAN ART that comprises an unsaturated carboxylic acid salt.

Mixed compounds of polyolefins and rubbers containing acrylonitrile units are also preferred, more preferably compounds containing a copolymer of ethylene with NBRs or HNBRs or the above-mentioned modified HNBRs. For example, rubbers containing EPDM (ethylene-propylene diene monomer) or EPM (ethylene-propylene monomer) can be added to polymers containing acrylonitrile units in quantities preferably comprised between 1 and 30%.

In addition to the elastomeric materials, the body compound can comprise conventional additives, such as, for example, reinforcement agents, fillers, pigments, stearic acid, accelerators, vulcanisation agents, antioxidants, activators, initiators, plasticizers, waxes, prevulcanisation inhibitors, antidegradants, process oils and the like.

In an aspect of the present invention, the cords 3 are formed by a plurality of threads or filaments or yarns and each thread is formed by a plurality of filaments.

Preferably, the cords 3 are made of at least one material chosen from the group consisting of glass fibres, aramid fibres, carbon fibres and PBO fibres, and even more preferably have at least outer filaments made of glass, as this material has proven to be particularly critical when it must be used at low temperatures.

Alternatively, the cords could be made of two different fibrous materials.

Even more preferably, at least the outer surface of the cords is made of fibreglass.

Advantageously, the working surface of the transmission belt 1 is covered with a coating 8. More advantageously, the coating 8 is chosen from the group consisting of woven fabric, knitted fabric and non woven fabric.

More advantageously, in the case in which a woven fabric is used, the coating 8 comprises threads that extend substantially in the longitudinal direction of the toothed belt. Generally, these longitudinal threads are the weft threads.

According to a preferred embodiment of the present invention, the coating of the working surface of the transmission belt is treated with at least a first and/or a second protective treatment of the coating or an adhesive treatment of the coating.

From examination of the characteristics of the belt produced according to the present invention, the advantages that can be achieved thereby are evident.

It has been experimentally verified that the use of a belt according to the present invention allows the stiffness of the tooth to be increased, with a consequent increase of transmissible specific load. Clearly, the stiffness of the tooth can be modulated by varying the physical and geometrical characteristics of the helical element and of the wire constituting it.

Moreover, by inserting the helical element into the teeth it is possible stabilize the stiffness of the tooth for the whole of the lifespan of the belt. In particular, it is possible to improve the stiffness of the tooth in critical environmental conditions, such as in the presence of contaminants and high or low temperature thermal cycles.

Moreover, by appropriately varying the number of windings per centimetre of width of the belt and the size of the section of the helical element and the size of the single winding of the helical element and the material constituting the wire of the helical element, it is possible to apply this reinforcing helical element to all pitches, in particular to the normal pitches for transmission belts of transmission systems of a motor vehicle.

In particular, the addition of a helical element allows the level of deformation of the compounds used in toothed belts to be reduced and consequently the mechanical properties thereof to be maintained more stable through time, in particular, the characteristics of damping and elasticity of the tooth.

The helical element can be produced in the shape suitable to be applied to each profile of the teeth of the synchronous belts currently in use and consequently it can be used to stiffen synchronous belts currently in use without introducing any other variation to the transmission system.

Moreover, toothed belts provided with helical element can be used in all current transmission systems of vehicles and are compatible with the most common pulleys without introducing further variations.

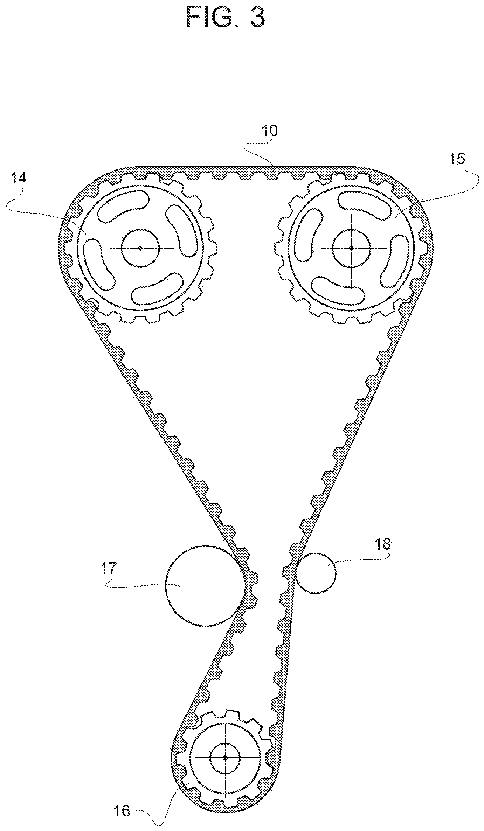

Preferably, the toothed belts 1 provided with helical element 10 are used in a belt transmission system 12 such as the one illustrated in Fig. 3 purely by way of example.

Preferably, the transmission system 12 comprises at least one toothed pulley, more preferably two toothed pulleys 14 and 15. Even more preferably, the transmission system comprises three toothed pulleys 14, 15 and 16. In a particularly preferred embodiment of the invention, in addition to the toothed pulleys the transmission system also comprises tensioners, such as those illustrated in Fig. 3 with the reference numerals 17 and 18.

The present invention will be described below by means of examples, but without limiting the invention to these examples.

### EXAMPLE 1

A transmission belt according to the invention is prepared for tests with the characteristics of table 1.

**Table 1**

| | |
|---|---|
| Number of teeth | 118 |
| Pitch | 9.525 mm |
| Width | 16 mm |

| Profile | RPP+ |
|---|---|
| Covering of the working surface | Fabric with warp and weft threads in Pa 66 |
| Fabric treatment | Imbibition compound in HNBR + PTFE treatment |
| Body compound | HNBR |

A helical element having the following characteristics is inserted into each tooth during production of the belt:

**Table 2**

| Material | Steel |
|---|---|
| Spiralling pitch | 3 mm |
| Section area and shape | 1.1 mm^2 |
| Number of windings per cm of width | 5 |

Functional tests are conducted at different levels of load applied to the individual tooth. The number of cycles before damage occurs to one of the components of the belt as a whole are counted and compared with a standard belt structure.

Functional tests are conducted at different levels of engine load on the whole transmission. The resulting transmission errors between the pulleys at different engine speeds and loads are assessed and compared with a standard belt structure. The loads generated on the belt are assessed and compared with a standard belt structure.

Durability tests are conducted in an oil environment at different ambient temperatures, with transmission in air or transmission immersed in oil, with or without the addition of pollutants. The total duration of the single test and the modes of damage of the belt as a whole are assessed and compared with a standard belt structure. According to the results of the standard tests conducted, with the use of a toothed belt according to the invention it is possible to obtain a longer average lifespan and, in particular, improved mechanical properties.

## Claims

1. A toothed transmission belt (1) comprising a body (2) of a first elastomeric material, a plurality of teeth (6) transversal to said belt and a plurality of cords (3) embedded in the body of the belt and a back (7) **characterised in that** it comprises at least a helical element (10) constituted by an elongated wire or element wound in a helix transversal to said belt and arranged at least partially inside said teeth.

2. The transmission belt (1) according to claim 1, **characterised in that** said helical element (10) is a spring.

3. The transmission belt (1) according to claim 1 or 2, **characterised in that** said helical element (10) has an elongation stiffness in the direction of the axis of the winding comprised between 0.06 N/mm and 300 N/mm.

4. The transmission belt (1) according to any one of the preceding claims, **characterised in that** said helical element (10) has windings with a circular, elliptical or polygonal shaped section.

5. The transmission belt (1) according to any one of the claims from 2 to 4, **characterised in that** said helical element (10) has a section of the wire having an area comprised between 0.01 mm² and 10 mm².

6. The transmission belt (1) according to any one of the preceding claims, **characterised in that** the helical element has a length comprised between 1 cm and 20 cm per centimetre of belt width, when calculated on the vulcanised belt.

7. The transmission belt (1) according to any one of the preceding claims, **characterised in that** helical element (10) has a number of windings comprised between 0.1 and 40 per centimetre of belt width.

8. The transmission belt (1) according to any one of the preceding claims, **characterised in that** the helical element (10) has windings spaced by a pitch of spiralling comprised between 0.03 mm and 10 mm.

9. The transmission belt (1) according to any one of the preceding claims, **characterised in that** the helical element is formed by at least 30% by weight of metal.

10. The transmission belt (1) according to any one of the preceding claims, **characterised in that** it has a width comprised between 3 mm and 100 mm.

11. The transmission belt (1) according to any one of the preceding claims, **characterised in that** it has a toothing pitch comprised between 3 mm and 20 mm.

12. A transmission belt system (13), **characterised in that** it comprises a belt (1) according to any one of the claims from 1 to 11 and at least one pulley cooperating with said belt (11).

## Patentansprüche

1. Gezahnter Transmissionsriemen (1) mit einem Körper (2) aus einem ersten elastomeren Material, mehreren quer zu dem Riemen verlaufenden Zähnen (6) und mehreren in den Körper des Riemens eingebetteten Kordeln (3), sowie einer Rückseite (7), **dadurch gekennzeichnet, dass** er mindestens ein spiralförmiges Element (10) aufweist, das aus einem länglichen Draht oder einem spiralförmig gewundenen Element, quer zu dem Riemen, gebildet ist und wenigstens teilweise innerhalb der Zähne angeordnet ist.

2. Transmissionsriemen (1) nach Anspruch 1, **dadurch gekennzeichnet, dass** das spiralförmige Element (10) eine Feder ist.

3. Transmissionsriemen (1) nach Anspruch 1 oder 2, **dadurch gekennzeichnet, dass** das spiralförmige Element (10) eine Dehnungssteifigkeit in der Richtung der Wickelachse hat, die zwischen 0,06 N/mm und 300 N/mm liegt.

4. Transmissionsriemen (1) nach einem der vorstehenden Ansprüche, **dadurch gekennzeichnet, dass** das spiralförmige Element (10) Windungen mit einem kreisförmigen, elliptischen oder polygonalen Querschnitt hat.

5. Transmissionsriemen (1) nach einem der Ansprüche 2 bis 4, **dadurch gekennzeichnet, dass** das spiralförmige Element (10) einen Drahtabschnitt hat mit einer Fläche, die zwischen 0,01 mm² und 10 mm² liegt.

6. Transmissionsriemen (1) nach einem der vorstehenden Ansprüche, **dadurch gekennzeichnet, dass** das spiralförmige Element eine von Länge von zwischen 1 cm und 20 cm pro Zentimeter Riemenbreite hat, berechnet auf den vulkanisierten Riemen.

7. Transmissionsriemen (1) nach einem der vorstehenden Ansprüche, **dadurch gekennzeichnet, dass** das spiralförmige Element (10) mehrere Windungen hat von zwischen 0,1 und 40 pro Zentimeter Riemenbreite.

8. Transmissionsriemen (1) nach einem der vorstehenden Ansprüche, **dadurch gekennzeichnet, dass** das spiralförmige Element (10) Windungen hat, deren Abstand zwischen den Windungen zwischen 0,03 mm und 10 mm liegt.

9. Transmissionsriemen (1) nach einem der vorstehenden Ansprüche, **dadurch gekennzeichnet, dass** das spiralförmige Element mit mindestens 30 Gewichts-% aus Metall besteht.

10. Transmissionsriemen (1) nach einem der vorstehenden Ansprüche, **dadurch gekennzeichnet, dass** er eine Breite hat, die zwischen 3 mm und 100 mm liegt.

11. Transmissionsriemen (1) nach einem der vorstehenden Ansprüche, **dadurch gekennzeichnet, dass** er eine Zahnteilung hat, die zwischen 3 mm und 20 mm liegt.

12. Transmissionsriemensystem (13), **dadurch gekennzeichnet, dass** es einen Riemen (1) nach einem der Ansprüche 1 bis 11 umfasst sowie wenigstens eine mit dem Riemen (11) zusammenwirkende Riemenscheibe.

## Revendications

1. Courroie (1) de transmission dentée comprenant un corps (2) en un premier matériau élastomère, une pluralité de dents (6) transversales par rapport à ladite courroie et une pluralité de cordons (3) incorporés dans le corps de la courroie et un envers (7) **caractérisé en ce qu'**il comprend au moins un élément hélicoïdal (10) constitué par un fil ou élément allongé enroulé en hélice transversal par rapport à ladite courroie et agencé au moins partiellement à l'intérieur desdites dents.

2. Courroie (1) de transmission selon la revendication 1, **caractérisée en ce que** ledit élément hélicoïdal (10) est un ressort.

3. Courroie (1) de transmission selon la revendication 1 ou 2, **caractérisée en ce que** ledit élément hélicoïdal (10) a une rigidité à l'allongement dans la direction de l'axe de l'enroulement comprise entre 0,06 N/mm et 300 N/mm.

4. Courroie (1) de transmission selon l'une quelconque des revendications précédentes, **caractérisée en ce que** ledit élément hélicoïdal (10) a des enroulements avec une section de forme circulaire, elliptique ou polygonale.

5. Courroie (1) de transmission selon l'une quelconque des revendications 2 à 4, **caractérisée en ce que** ledit élément hélicoïdal (10) a une section du fil ayant une superficie comprise entre 0,01 mm² et 10 mm².

6. Courroie (1) de transmission selon l'une quelconque des revendications précédentes, **caractérisée en ce que** l'élément hélicoïdal a une longueur comprise entre 1 cm et 20 cm par centimètre de largeur de courroie, lorsqu'elle est calculée sur la courroie vulcanisée.

7. Courroie (1) de transmission selon l'une quelconque des revendications précédentes, **caractérisée en ce qu'**un élément hélicoïdal (10) a un nombre d'enroulements compris entre 0,1 et 40 par centimètre de largeur de courroie.

8. Courroie (1) de transmission selon l'une quelconque des revendications précédentes, **caractérisée en ce que** l'élément hélicoïdal (10) a des enroulements espacés d'un pas de spirale compris entre 0,03 mm et 10 mm.

9. Courroie (1) de transmission selon l'une quelconque des revendications précédentes, **caractérisée en ce que** l'élément hélicoïdal est formé par au moins 30 % en poids de métal.

10. Courroie (1) de transmission selon l'une quelconque des revendications précédentes, **caractérisée en ce qu'**elle a une largeur comprise entre 3 mm et 100 mm.

11. Courroie (1) de transmission selon l'une quelconque des revendications précédentes, **caractérisée en ce qu'**elle a un pas de denture compris entre 3 mm et 20 mm.

12. Système de courroie de transmission (13), **caractérisé en ce qu'**il comprend une courroie (1) selon l'une quelconque des revendications 1 à 11 et au moins une poulie coopérant avec ladite courroie (11).
